# EUROPÄISCHE PATENTSCHRIFT

(11) **EP 1 082 888 B1**
(45) Veröffentlichungstag und Bekanntmachung des Hinweises auf die Patenterteilung: **05.03.2003**
(21) Anmeldenummer: 00119692.2
(22) Anmeldetag: 08.09.2000
(51) Int. Cl.: A01B 15/12, A01B 3/46

(54) **Aufsattel- bzw. Anhängedrehpflug mit Zugpunktregelung**
Semi-mounted or trailed reversible plough with a device for adjusting the point of traction
Charrue réversible semi-portée ou trainée avec un dispositif pour régler le point de traction

(30) Priorität: 10.09.1999 DE 19943269
(43) Veröffentlichungstag der Anmeldung: 14.03.2001
(73) Patentinhaber: Lemken GmbH & Co. KG, 46519 Alpen (DE)
(72) Erfinder: Meurs, Wilhelm, 46519 Alpen (DE)
(74) Vertreter: Schulte, Jörg, Dipl.-Ing.

(56) Entgegenhaltungen:
- EP-A- 0 318 391
- EP-A- 0 566 821
- DE-U- 9 202 278
- FR-A- 2 701 798
- US-A- 4 266 618

## Beschreibung

Die Erfindung bezieht sich auf einen Aufsattel- oder Anhängedrehpflug mit einer Verbindungseinrichtung für die Verbindung mit einem Zugfahrzeug, mit einem mindestens zwei Pflugkörper und ein endseitig angeordnetes Fahrwerk mit mindestens einem Stützrad aufweisenden Pflugrahmen, dem ein zusätzlicher Pflugrahmen mit mindestens zwei Pflugkörpern zugeordnet ist.

Ein derartiger Pflug ist dem europäischen Patent EP 318 391 zu entnehmen. Der Gegenstand dieses europäischen Patentes zeigt einen Aufsatteldrehpflug mit Pflugrahmen und zusätzlichem Pflugrahmen, wobei zwischen dem Pflugrahmen und dem zusätzlichen Pflugrahmen ein Fahrwerk angeordnet ist, das zwei hintereinander liegende und fluchtende Schwenklagerungen aufweist, um die der Pflugrahmen und der zusätzliche Pflugrahmen schwenkbar sind. Direkt hinter der hinteren Schwenklagerung ist der zusätzliche Pflugrahmen über Vorspanneinheiten mit dem drehenden Teil des Pflugrahmens verbunden. Diese Vorspanneinheiten lassen während der Pflugarbeit keine Einstellungsänderung zu. Dies hat den Nachteil, dass in wechselnden Bodenverhältnissen der zusätzliche Pflugrahmen entweder aus dem Boden herausgedrückt wird oder zu tief arbeitet. Daher ist ein derartiger Pflug in wechselnden Bodenverhältnissen nicht problemlos einsetzbar.

Das europäische Patent EP 566 821 zeigt einen Aufsatteldrehpflug mit Pflugrahmen und zusätzlichem Pflugrahmen, wobei hier auf Vorspanneinheiten verzichtet wird. Der zusätzliche Pflugrahmen wird direkt mit den Pflugrahmen über ein fixes Gelenk verbunden. Auch diese Art der Verbindung des zusätzlichen Pflugrahmens mit dem Pflugrahmen führt dazu, dass bei wechselnden Bodenverhältnissen der zusätzliche Pflugrahmen zu tief arbeitet oder aus dem Boden herausgedrückt wird. Auch diese Pflugausführung erlaubt keine störungsfreie Pflugarbeit, was von Nachteil ist, da derartige große Pflüge auf Großbetrieben Tag und Nacht im Einsatz sind und gerade dort häufig wechselnde Bodenverhältnisse vorzufinden sind.

Der Erfindung liegt die Aufgabe zugrunde, einen Aufsattel- oder Anhängedrehpflug mit Fahrwerk so auszubilden, dass der zusätzliche Pflugrahmen so mit dem Pflugrahmen verbunden ist, dass der Zugpunkt sich automatisch den Bodenverhältnissen bzw. der Lage des zusätzlichen Pflugrahmens anpasst.

Diese Aufgabe wird gemäß der Erfindung dadurch gelöst, dass der zusätzliche Pflugrahmen mittelbar mit dem Pflugrahmen längsverschiebbar und kardanisch und verdrehfest verbunden ist und dass zwischen dem Pflugrahmen und dem zusätzlichen Pflugrahmen ein Regelgetriebe vorgesehen ist, das die Höhenlage des Zugpunktes des zusätzlichen Pflugrahmens beeinflussend ausgebildet ist.

Bei der erfindungsgemäßen Lösung wird der zusätzliche Pflugrahmen also über ein Regelgetriebe so mit dem Pflugrahmen verbunden, dass auch bei wechselnden Bodenverhältnissen immer eine optimale Zugpunktlage sichergestellt ist, wobei die besondere Verbindung zwischen den beiden Pflugrahmen dies noch begünstigt.

Erfindungsgemäß ist weiter vorgesehen, dass das Fahrwerk eine in Arbeitsstellung des Pfluges horizontal und in Längsrichtung angeordnete Schwenklagerung mit Schwenkachse und einen um die Schwenkachse schwenkenden Kuppelrahmen aufweist, der in Fahrtrichtung mit dem hinteren Ende des Pflugrahmens verbunden ist und auf der gegenüberliegenden Seite eine Kuppelrahmenerweiterung mit kulissenförmiger Führung aufweist, die mit der Kulisse der Kuppelrahmenerweiterung längsverschiebbar, kardanisch und verdrehfest verbunden ist. Dadurch wird sichergestellt, dass der zusätzliche Pflugrahmen über Mittel verfügt, die eine seitliche und auch vertikale Anpassung an die jeweiligen Bodenverhältnisse erlauben, unabhängig vom Pflugrahmen.

Eine vom Aufbau her einfache Verbindung beider Pflugrahmen ist die, bei der die Kuppelrahmenerweiterung eine in Arbeitsstellung des Pfluges horizontal und in Längsrichtung angeordnete Schwenklagerung mit Schwenkachse aufweist mit schwenkbar zur Kuppelrahmenerweiterung angeordnetem Stützarm und Stabilisierungsstreben und dass der zusätzliche Pflugrahmen mit der Kuppelrahmenerweiterung verdrehfest verbindbar ausgebildet ist. Diese besondere Verbindung des zusätzlichen Pflugrahmens mit dem Pflugrahmen hat den Vorteil, dass sowohl der Pflugrahmen als auch der zusätzliche Pflugrahmen einfach ausgebildet ist und alle schwenkenden und regelnden Teile am Fahrwerk, am Kuppelrahmen oder an der Kuppelrahmenerweiterung angeordnet sind. Der Pflugrahmen und auch der zusätzliche Rahmen werden so nicht unnötig kompliziert aufgebaut und nicht unnötig geschwächt.

Ein einfaches Ziehen des zusätzlichen Pflugrahmens wird ermöglicht, indem das Fahrwerk einen Zugarm mit Zugachse aufweist, der den Stützarm und damit die Kuppelrahmenerweiterung mit zusätzlichem Pflugrahmen ziehend ausgebildet ist. Dadurch wird auf einfache Weise der zusätzliche Pflugrahmen gezogen.

Das weiter vorn erwähnte Regelgetriebe ist aus der kulissenförmigen Führung mit Kulisse in Verbindung mit dem Zugarm, der Zugachse und dem Stützarm gebildet. Über diese einfachen Bauteile wird ein Regelgetriebe geschaffen, das selbstregelnd und funktionssicher ist. Komplizierte und teure Regelkomponenten sind nicht erforderlich.

Der Stützarm weist gemäß der Erfindung eine Kurvenbahn auf, wobei auf der Zugachse eine Rolle vorgesehen ist, die auf der Kurvenbahn abrollend angeordnet ist. Hierdurch wird sichergestellt, dass das Regelgetriebe, das während der Arbeit ständig den Zugpunkt regelt, praktisch keinem Verschleiß unterworfen ist und aufgrund der Kurvenbahn hinsichtlich der Regelcharakteristik optimal voreingestellt werden kann.

Eine Intensivierung des Regelbetriebes ist möglich, indem auf der Zugachse ein Hebel gelagert ist, der die Rolle aufnimmt und die Anlenkpunkte für einen Zuglenker und einen Lenker aufweist, wobei der Zuglenker mit dem Zugarm und der Lenker mit dem Stützarm verbunden und zusammen mit der kulissenförmigen Führung als Regelgetriebe arbeitend ausgebildet sind. Dadurch kann die zuvor beschriebene etwas träger reagierende Zugpunktregelung intensiviert werden, da über dieses "Hebelgetriebe" schon bei einer geringfügigen Winkelveränderung des zusätzlichen Pflugrahmens eine ausreichend große Regelkorrektur erfolgen kann.

Erfindungsgemäß ist weiter vorgesehen, dass der Zuglenker längenveränderbar, vorzugsweise als Hydraulikzylinder ausgebildet ist. Mit dieser Ausführung kann in einfacher Weise die Lage des zusätzlichen Pflugrahmens verändert oder ganz blockiert werden. Letzteres ist dann erforderlich, wenn der zusätzliche Pflugrahmen für die Transportfahrt vollständig ausgehoben werden muss. Mit dem Hydraulikzylinder kann der zusätzliche Pflugrahmen unabhängig vom Pflugrahmen einfach ausgehoben werden.

Gemäß einer Weiterbildung der Erfindung ist vorgesehen, dass die Pflugkörper des Pflugrahmens schwenkbar mit dem Pflugrahmen über eine die Parallelführung der Pflugkörper bewirkenden Stange verbunden sind, dass der mit dem Fahrwerk verbundene Kuppelrahmen über eine senkrechte Achse mit dem Pflugrahmen verbunden und über eine Steuerstange parallel zu den Pflugkörpern führbar ausgebildet ist. Dies stellt sicher, dass die erfindungsgemäße Regelung des Zugpunktes auch bei Aufsatteldrehpflügen einsetzbar ist, bei denen die Arbeitsbreite pro Körper veränderbar ist.

Erfindungsgemäß ist weiter vorgesehen, dass sowohl der Pflugrahmen als auch der zusätzliche Pflugrahmen über je einen Hydraulikzylinder um die jeweilige senkrechte Achse bei feststehender Steuerstange verschwenkbar ausgebildet sind. Dies ermöglicht die Verstellung der Arbeitsbreite pro Körper gemäß Stand der Technik.

Weiter ist vorgesehen, dass die Hydraulikzylinder über einen schlepperseitigen Mengenteiler jeweils mit der für die parallele Verschwenkung der Pflugkörper erforderliche Ölmenge versorgbar ausgebildet sind. Über den schlepperseitigen Mengenteiler werden die Hydraulikzylinder mit einer voreingestellten Ölmenge versorgt, um so die Arbeitsbreite pro Körper um den voreingestellten Betrag zu verändern.

Zweckmäßig ist, dass der Hydraulikzylinder für die Verstellung der Arbeitsbreite pro Körper des zusätzlichen Pflugrahmens im Durchmesser gleich oder kleiner ausgebildet ist als der entsprechende Hydraulikzylinder des Pflugrahmens und dass jeder Hydraulikzylinder mit fernbedienbaren, den Hubweg der Hydraulikzylinder begrenzenden Begrenzungsanschlägen oder -ventilen ausgerüstet ist. Damit ist es möglich, insbesondere den zusätzlichen Pflugrahmen mit einem preisgünstigeren kleineren Zylinder auszurüsten, der dennoch die Arbeitsbreite pro Körper verändert, und zwar um den gleichen Betrag wie bei den Körpern des Pflugrahmens.

Die besagten Hydraulikzylinder sind zweckmäßig hydraulisch kommunizierend miteinander verbunden ausgebildet. Beide Hydraulikzylinder werden so exakt um den gleichen Betrag ein- und ausgefahren und gewährleisten, dass sowohl die Arbeitsbreite pro Körper des Pflugrahmens als auch die des zusätzlichen Pflugrahmens exakt um den gleichen Betrag verstellt wird.

Für den Feldrand z. B. ist es vorteilhaft, wenn die Hydraulikzylinder unabhängig voneinander betätigbar ausgebildet sind, dass die Arbeitsbreite pro Pflugkörper des zusätzlichen Pflugrahmens unabhängig von der Arbeitsbreite des Pflugrahmens breiter oder schmaler einstellbar ist und dass die kardanische Verbindung des Pflugrahmens und des zusätzlichen Pflugrahmens eine seitliche Verschwenkbarkeit des zusätzlichen Pflugrahmens von mindestens + 10° und - 10° zulassend ausgebildet ist. Mit dieser besonderen Einstellungsmöglichkeit ist es möglich, den für die Pflugarbeit in der Arbeitsbreite pro Körper optimal eingestellten Pflugrahmen in seiner Breiteneinstellung zu belassen und Arbeitsbreitenkorrekturen der gesamten Pflugkombination im Bereich des seitlichen Feldrandes durch Verstellen des zusätzlichen Pflugrahmens auszugleichen. Falls während der Pflugarbeit ein Baum oder Mast im Bereich des zusätzlichen Pflugrahmens steht, braucht auch nur dieser auf eine schmalere Arbeitsbreite eingestellt zu werden, um das Hindernis zu passieren. Die Arbeitsbreite des Pflugrahmens selbst braucht dagegen vorteilhaft nicht verändert zu werden.

Erfindungsgemäß ist schließlich noch vorgesehen, dass die Stellvorrichtungen für die Arbeitstiefe, die Neigung, die Arbeitsbreite pro Pflugkörper und die Drehvorrichtung über einen Bordcomputer betätigbar ausgebildet sind und dass das Ausheben, das Absenken und das Drehen des Pflugrahmens und des zusätzlichen Pflugrahmens jeweils am Feldende und -anfang automatisch GPS oder DGPS unterstützt durchführbar sind. Dadurch ist es möglich, den Pflug hinsichtlich der Arbeitsbreite zu programmieren bzw. die Arbeitsbreite um vorprogrammierte Werte zu verändern. Beispielsweise kann die Arbeitsbreite von 4 m auf 6 m oder 3 m auf 4 m verändert werden, falls die Feldverhältnisse dies erfordern und die Schlepperleistung dies zulässt. In Verbindung mit den im Bordcomputer einprogrammierten Felddaten und Feldranddaten wird der Pflugrahmen kurz vor Erreichen des Feldendes wie gewünscht gleichzeitig mit dem zusätzlichen Pflugrahmen ausgehoben und die Drehung eingeleitet. Nach der Kehrfahrt auf dem Vorgewende wird der Pflugrahmen und der zusätzliche Pflugrahmen wieder so eingesetzt, dass ein optimales gerades und kurzes Vorgewende erzielt wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Pflug in Arbeitsstellung in Draufsicht,
- Figur 2: einen Pflug in halbgedrehter Stellung in Seitenansicht,
- Figur 3: ein Fahrwerk mit Kuppelrahmen und Kuppelrahmenerweiterung sowie einfachem Regelgetriebe und
- Figur 4: ein Fahrwerk mit Kuppelrahmen und Kuppelrahmenerweiterung sowie einem optimierten Regelgetriebe.

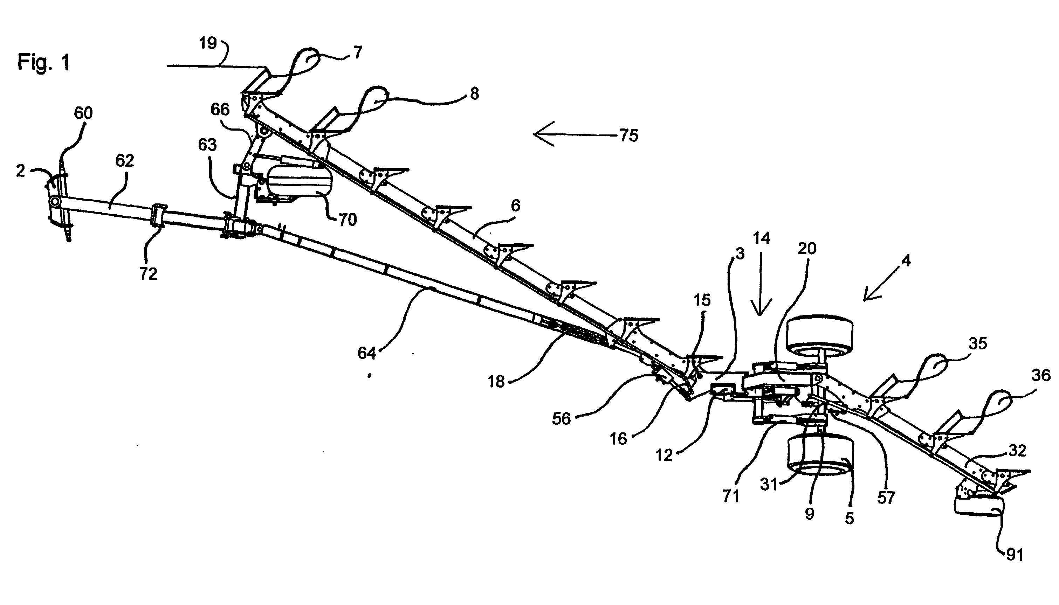

Figur 1 zeigt den erfindungsgemäßen Pflug als Aufsatteldrehpflug 1 mit der Verbindungseinrichtung 2. Die Verbindungseinrichtung 2 weist die Anlenkpunkte zum Unter- und Oberlenker 60 und 61 für die Verbindung mit dem Dreipunktgestänge eines nicht dargestellten Traktors auf. Die Verbindungseinrichtung 2 ist über eine Zugeinrichtung 62 mit der Drehvorrichtung 63 und dem Zugrahmen 64 verbunden. Der Zugrahmen 64 ist hinten mit einem schwenkbaren und nach unten auskragenden Schwenkarm 65 kreuzgelenkartig verbunden, bei dem sich der Verbindungspunkt 17 tief unterhalb des Pflugrahmens 6 befindet. Der Zugrahmen 64 ist mittelbar verdrehfest mit der Verbindungseinrichtung 2 verbunden und hält so den Schwenkarm 65 in der zuvor beschriebenen Position. Während der Pflugarbeit befindet sich dadurch der rahmenseitige Zugpunkt weit unterhalb des Pflugrahmens 6, sodass der Pflugrahmen 6 während der Arbeit stabilisierend nach oben gezogen wird und daher ohne Stabilitätseinbußen leichter dimensioniert werden kann.

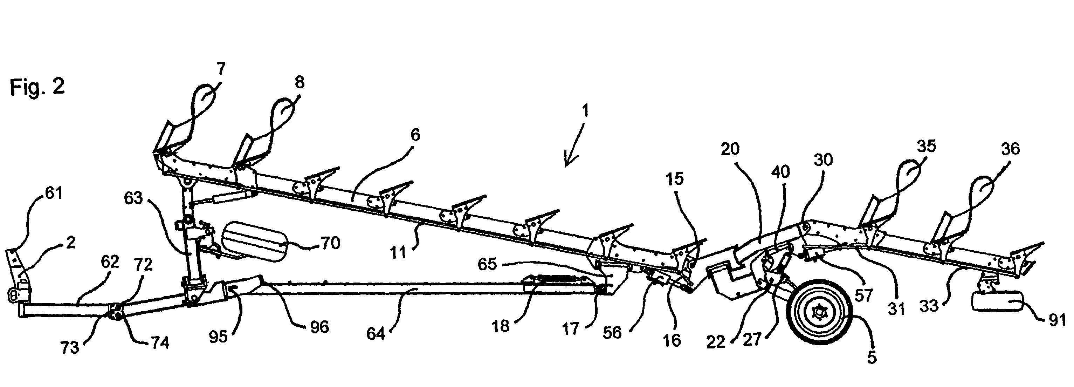

Die besondere Art der Anlenkung des Schwenkarms 65 ist der Figur 2 zu entnehmen. Der Pflugrahmen 6 und die Zugeinrichtung 62 mit dem über den Hydraulikzylinder 18 verstellbaren Zugrahmen 64 sind über die Drehvorrichtung 63 mit Wendelenker 66 verbunden. Der Wendelenker 66 ist längenveränderbar ausgebildet, um so die Verbindungseinrichtung 2 in einem unterschiedlichen Abstand zur Furchenkante 19 zu verlagern. Dadurch ist es möglich, mit dem Aufsatteldrehpflug 1 mit dem Traktor "in der Furche" oder "auf dem Land" zu fahren. Ein Tastrad 70 führt den Pflugrahmen 6 vorne bzw. entlastet das Dreipunktgestänge des Traktors, wenn mit dem Traktor auf dem Land gepflügt wird. Das Tastrad 70 kann in einer Mittelstellung gebracht und dort fixiert werden, falls dies einsatzabhängig gewünscht oder gefordert ist, z.B. wenn "in der Furche" gepflügt werden soll.

Heckseitig wird der Pflugrahmen 6 des Aufsattelpfluges 1 von einem Fahrwerk 4 getragen, wobei das Fahrwerk über die senkrechte Achse 15 und der Steuerstange 16 so mit dem Pflugrahmen 6 verbunden ist, dass es zu den Pflugkörpern 7, 8 während der Arbeit parallel geführt wird. Die Parallelführung der Pflugkörper 7, 8 zueinander wird über die Stange 11 und die Verschwenkung der Pflugkörper 7, 8 und des Fahrwerkes 4 zum Pflugrahmen 6 über den Hydraulikzylinder 56 bewirkt, der mit dem Pflugrahmen 6 und dem Kuppelrahmen 3 im Abstand zur senkrechten Achse 15 verbunden ist. Der Kuppelrahmen 3 ist schwenkbar über eine Schwenklagerung 12 mit Schwenkachse 13 mit dem Fahrwerk 4 verbunden. Das Fahrwerk 4 weist einen Zugarm 22 und eine Verbindungsvorrichtung 14 auf mit kulissenförmiger Führung 25, in der eine Kulisse 34 längsverschiebbar, kardanisch und verdrehfest geführt ist. Die Kulisse 34 ist Bestandteil einer Kuppelrahmenerweiterung 20, an der der zusätzliche Pflugrahmen 32 um die Achse 30 schwenkbar angebaut ist.

Am zusätzlichen Pflugrahmen 32 sind die einzelnen Pflugkörper 35, 36 schwenkbar verbunden und werden über die Stange 33 geführt. Die Schnittbreitenänderung bzw. die Arbeitsbreitenänderung pro Pflugkörper 35, 36 erfolgt über den Hydraulikzylinder 57. Die Parallelführung des zusätzlichen Pflugrahmens 32 zur Fahrwerkserweiterung wird über die Steuerstange 31 vorgegeben. Die mittelbare längsverschiebbare, kardanische und verdrehfeste Verbindung des zusätzlichen Pflugrahmens 32 mit dem Pflugrahmen 6 lässt eine seitliche individuelle Anpassung des zusätzlichen Pflugrahmens 32 sowie eine von der Arbeitsbreite pro Pflugkörper 35, 36 des Pflugrahmens 6 abweichende Arbeitsbreite pro Pflugkörper zu.

Das Fahrwerk 4 weist eine quer zur Fahrtrichtung verlaufende Fahrwerksachse 9 auf, die links und rechts mit Stützrädern 5 versehen ist. Die Arbeitstiefe des Pflugrahmens 6 wird hinten über die Hydraulikzylinder 71 eingestellt. Dies ist insbesondere der Figur 2 zu entnehmen.

Der Figur 2 ist zusätzlich zu entnehmen, dass der vertikale Zugpunkt 72 der Zugeinrichtung 62 und damit des gesamten Pfluges 1 einstellbar ist. Zwei unterschiedliche Zugpunktstellungen 73 und 74 sind hier vorgesehen. Zusätzlich kann mit der Stellvorrichtung mit Schwenkachse 95 und Stiftverstellung 96 der Zugpunkt 72 in Relation zum Pflugrahmen 6 verstellt werden.

Die Pflugkörper 7 und 8 sind über Körperhalme mit dem Pflugrahmen 6 verbunden. Wobei es denkbar ist, dass die Pflugkörper 7, 8 über Abschersicherungen verfügen und/oder automatische Überlastsicherungen mit dem Pflugrahmen 6 verbunden sind, die ein seitliches Ausweichen und ein Ausweichen nach oben und unten zulassen.

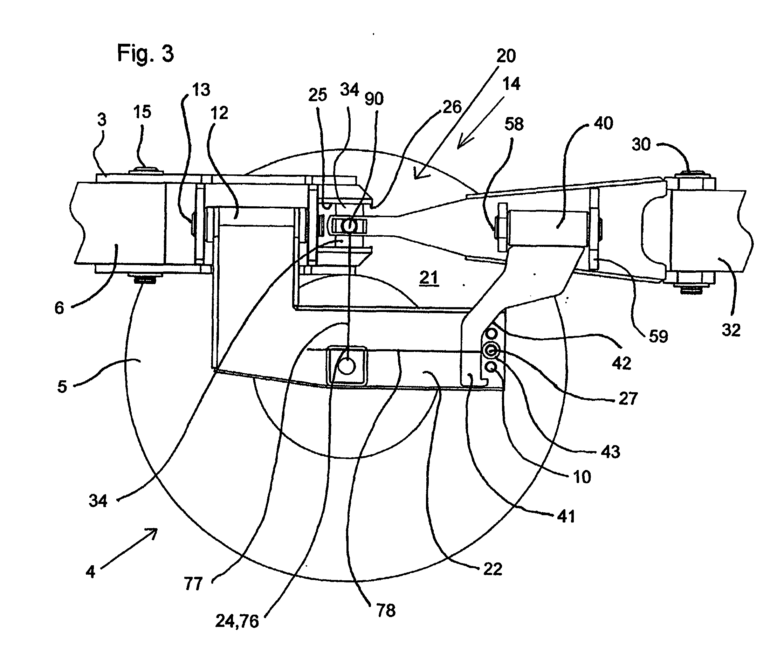

Die Figur 3 zeigt das Fahrwerk 4 mit dem über die Schwenklagerung 12 mit Schwenkachse 13 gelagerten Kuppelrahmen 3, der über die vertikale Achse 15 mit dem Pflugrahmen verbunden ist. Der Kuppelrahmen 3 weist hinten die kulissenförmige Führung 25 auf, in der die Kulisse 34 längsverschiebbar und verdrehfest geführt ist. Mit der Kulisse 34 selbst ist die Kuppelrahmenerweiterung 20 kardanisch und verdrehfest verbunden. Die Kuppelrahmenerweiterung 20 weist seitlich die Schwenklagerung 40 mit nach unten gerichtetem Stützarm 41 und Schwenkachse 58 auf, die über Lagerplatten 59 gelagert ist. Das Fahrwerk 4 mit seiner Fahrwerksachse 9 und den Rädern 5 weist einen Zugarm 22 auf. Endseitig des Zugarmes 22 sind Bohrungen 10 für die Aufnahme einer Zugachse 27 vorgesehen. Auf der Zugachse 27 ist eine Rolle 43 gelagert. Die Zugachse 27 zieht in Arbeitsrichtung 75 den Stützarm 41 und damit die Kuppelrahmenerweiterung 20 mit angebautem zusätzlichem Pflugrahmen 32, der endseitig über die senkrechte Achse 30 mit der Kuppelrahmenerweiterung 20 verbunden ist. Während der Arbeit bildet der Schnittpunkt 76 der beiden Senkrechten 77 und 78 den Zugpunkt 24 des zusätzlichen Pflugrahmens 32. Die Senkrechte 77 ist senkrecht zur Kulissenführung 25 und die Senkrechte 78 senkrecht zur Kurvenbahn 42 angeordnet, und zwar dort, wo die Rolle 43 momentan den Stützarm 41 berührt.

Neigt der zusätzliche Pflugrahmen 32 dazu, aus dem Boden aufgrund mangelnder Einzugskräfte herauszugehen, so bewegt sich der Stützarm 41 nach oben, und zwar um den momentanen Drehpunkt 90. Dadurch erhöhen sich automatisch und selbstregelnd die Einzugskräfte aufgrund des zum zusätzlichen Pflugrahmen 32 relativ nach unten verlagerten Zugpunktes 24. Umgekehrt wird die Einzugskraft des zusätzlichen Pflugrahmens 32 reduziert, wenn sich der zusätzliche Pflugrahmen 32 aufgrund zu großer Einzugskräfte tiefer absenkt als gewünscht, da der nach oben geregelte Zugpunkt 24 regelnd korrigierend den zusätzlichen Pflugrahmen 32 wieder nach oben zieht.

Da aufgrund der unterschiedlichen Furchenzahl des zusätzlichen Pflugrahmens 32 andere Zugpunkte erforderlich sind, weist der Zugarm 22 die zuvor erwähnten Bohrungen 10 auf. Bei einer Erhöhung der Furchenzahl des zusätzlichen Pflugrahmens 32 muss eine höher gelegene Bohrung 10 gewählt werden. Bei einer Reduzierung der Furchenzahl des zusätzlichen Pflugrahmens muss eine niedriger gelegene Bohrung 10 gewählt werden.

Die zuvor beschriebenen Bauteile bilden das Regelgetriebe 21, das so den zusätzlichen Pflugrahmen selbstregelnd führt.

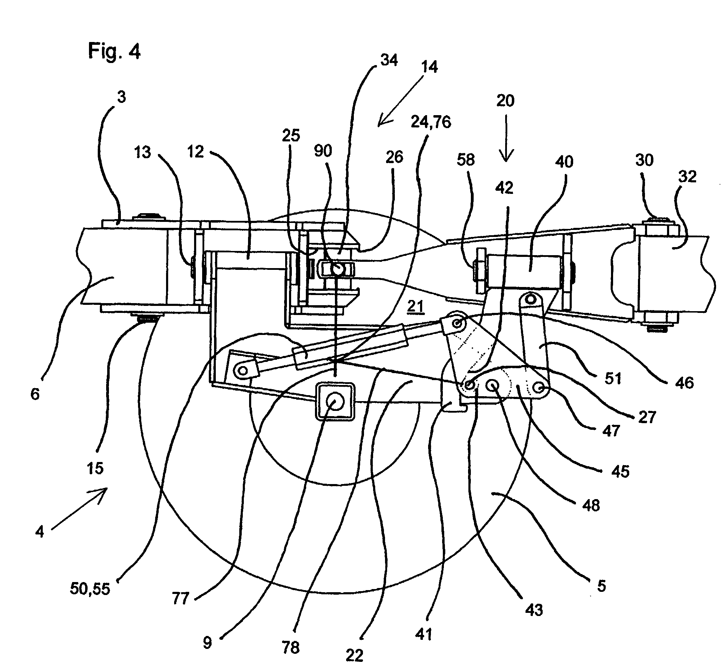

Die Figur 4 zeigt ein vergleichbares Fahrwerk 4 gemäß Figur 3 mit Kuppelrahmen 3 mit Kuppelrahmenerweiterung 20, bei dem das Fahrwerk 4 einen Zuglenker 50 und einen Hebel 45 mit um eine zusätzliche Achse 48 gelagerte Rolle aufweist. Der Hebel 45 ist um die Zugachse 27 schwenkbar gelagert. Endseitig weist der Hebel 45 den Anlenkpunkt 46 für den Zuglenker 50 und den Anlenkpunkt 47 auf, der mit dem Lenker 51 verbunden ist, der im Abstand zum momentanen Drehpunkt 90 mit dem Stützarm 41 und damit mit der Schwenklagerung 40 schwenkbar verbunden ist. Vorne ist der Hebel 45 mit dem Zuglenker 50 verbunden. Diese Kombination bildet ein aktiveres Regelgetriebe, das bereits bei geringen Winkelabweichungen des zusätzlichen Pflugrahmens 32 nach oben oder unten in Relation zum Fahrwerk 4 zu großen Zugpunktregelkorrekturen führt. Wenn sich der zusätzliche Pflugrahmen 32 nach oben bewegt, bewirkt der Lenker 51 eine Drehung des Hebels 45, wodurch die Rolle 43 um einen größeren Betrag als beim System gemäß Figur 3 nach unten bewegt wird. Durch diese Ausführung wird eine intensivere Zugpunktregelung des zusätzlichen Pflugrahmens 32 bewirkt. Auch bei diesem System wird der Zugpunkt 24 aus dem Schnittpunkt 76 der Senkrechten 77 und 78 gebildet. Eine geringfügige Längenänderung des Zuglenkers 50 bewirkt eine Verlagerung der Rolle nach unten oder oben und dadurch eine Anpassung des Zugpunktes. Dies dient dann als eine Voreinstellung zur Anpassung des Regelgetriebes 21 an die Furchenzahl des zusätzlichen Pflugrahmens 32.

Die beiden Figuren 3 und 4 sind als schematische Skizzen aufgebaut, um die Funktionsweise des Regelgetriebes 21 besser erläutern zu können. Der Zuglenker 50 kann auch als Hydraulikzylinder 55 ausgebildet sein, über den dann der zusätzliche Pflugrahmen 32 ausgehoben werden kann. Der zusätzliche Pflugrahmen 32 wird beim Ausheben zuerst etwas nach hinten bewegt, und zwar bis die Kulisse 34 sich gegen den Endanschlag 26 anlegt. Erst dann kann der zusätzliche Pflugrahmen 32 ausgehoben werden.

## Patentansprüche

1. Aufsattel- oder Anhängedrehpflug (1) mit einer Verbindungseinrichtung (2) für die Verbindung mit einem Zugfahrzeug, mit einem mindestens zwei Pflugkörper (7, 8) und ein endseitig angeordnetes Fahrwerk (4) mit mindestens einem Stützrad (5) aufweisenden Pflugrahmen (6), dem ein zusätzlicher Pflugrahmen (32) mit mindestens zwei Pflugkörper (35, 36) zugeordent ist,
**dadurch gekennzeichnet,**
**dass** der zusätzliche Pflugrahmen (32) mittelbar mit dem Pflugrahmen (6) längsverschiebbar und kardanisch und verdrehfest verbunden ist und dass zwischen dem Pflugrahmen (6) und dem zusätzlichen Pflugrahmen (32) ein Regelgetriebe (21) vorgesehen ist, das die Höhenlage des Zugpunktes (24) des zusätzlichen Pflugrahmens (32) beeinflussend ausgebildet ist.

2. Aufsattel- bzw. Anhängedrehpflug nach Anspruch 1,
**dadurch gekennzeichnet,**
**dass** das Fahrwerk (4) eine in Arbeitsstellung des Pfluges (1) horizontal und in Längsrichtung angeordnete Schwenklagerung (12) mit Schwenkachse (13) und einen um die Schwenkachse (13) schwenkenden Kuppelrahmen (3) aufweist, der in Fahrtrichtung mit dem hinteren Ende des Pflugrahmens (6) verbunden ist und auf der gegenüberliegenden Seite eine Kuppelrahmenerweiterung (20) mit kulissenförmiger Führung (25) aufweist, die mit der Kulisse (34) der Kuppelrahmenerweiterung (20) längsverschiebbar, kardanisch und verdrehfest verbunden ist.

3. Aufsattel- bzw. Anhängedrehpflug nach einem der vorhergehenden Ansprüche,
**dadurch gekennzeichnet,**
**dass** die Kuppelrahmenerweiterung (20) eine in Arbeitsstellung des Pfluges horizontal und in Längsrichtung angeordnete Schwenklagerung (40) mit Schwenkachse (58) und Stützarm (41) aufweist, der schwenkbar zur Kuppelrahmenerweiterung (20) angeordnet ist und Stabilisierungsstreben (59) aufweist, wobei der zusätzliche Pflugrahmen mit der Kuppelrahmenerweiterung (20) verdrehfest verbindbar ausgebildet ist.

4. Aufsattel- bzw. Anhängedrehpflug nach einem der vorhergehenden Ansprüche,
**dadurch gekennzeichnet,**
**dass** das Fahrwerk (4) einen Zugarm (22) mit Zugachse (24) aufweist, die den Stützarm (41) und damit die Kuppelrahmenerweiterung (20) mit zusätzlichem Pflugrahmen (32) ziehend ausgebildet ist.

5. Aufsattel- bzw. Anhängedrehpflug nach einem der vorhergehenden Ansprüche,
**dadurch gekennzeichnet,**
**dass** das Regelgetriebe (21) aus der kulissenförmigen Führung (25) mit Kulisse (34) in Verbindung mit dem Zugarm (22), der Zugachse (27) und dem Stützarm (41) gebildet ist.

6. Auf sattel- bzw. Anhängedrehpflug nach einem der vorhergehenden Ansprüche,
**dadurch gekennzeichnet,**
**dass** der Stützarm (41) eine Kurvenbahn (42) aufweist und auf der Zugachse (27) eine Rolle (43) vorgesehen ist, die auf der Kurvenbahn (42) abrollend angeordnet ist.

7. Aufsattel- bzw. Anhängedrehpflug nach einem der vorhergehenden Ansprüche,
**dadurch gekennzeichnet,**
**dass** auf der Zugachse (27) ein Hebel (45) drehbar gelagert ist, der die Rolle (43) aufnimmt und Anlenkpunkte (46, 47) für einen Zuglenker (50) und einen Lenker (51) aufweist, wobei der Zuglenker (50) mit dem Zugarm (22) und der Lenker (51) mit dem Stützarm (41) verbunden und zusammen mit der kulissenförmigen Führung (25) als Regelgetriebe (21) arbeitend ausgebildet sind.

8. Aufsattel- bzw. Anhängedrehpflug nach einem der vorhergehenden Ansprüche,
**dadurch gekennzeichnet,**
**dass** der Zuglenker (50) längenveränderbar, vorzugsweise als Hydraulikzylinder (55) ausgebildet ist.

9. Aufsattel- bzw. Anhängedrehpflug nach einem der vorhergehenden Ansprüche,
**dadurch gekennzeichnet,**
**dass** die Pflugkörper (7, 8) des Pflugrahmens (6) schwenkbar mit dem Pflugrahmen (6) über eine die Parallelführung der Pflugkörper (7, 8) bewirkenden Stange (11) verbunden sind, dass der mit dem Fahrwerk (4) verbundene Kuppelrahmen (3) über eine senkrechte Achse (15) mit dem Pflugrahmen (6) verbunden und über eine Steuerstange (16) parallel zu den Pflugkörpern (7, 8) führbar ausgebildet ist.

10. Aufsattel- bzw. Anhängedrehpflug nach einem der vorhergehenden Ansprüche,
**dadurch gekennzeichnet,**
**dass** sowohl der Pflugrahmen (6) als auch der zusätzliche Pflugrahmen (32) über je einen Hydraulikzylinder (56, 57) um die senkrechten Achsen (15) bzw. (30) verschwenkbar ausgebildet sind.

11. Aufsattel- bzw. Anhängedrehpflug nach einem der vorhergehenden Ansprüche,
**dadurch gekennzeichnet,**
**dass** die Hydraulikzylinder (56, 57) über einen schlepperseitigen Mengenteiler jeweils mit der für die parallele Verschwenkung der einzelnen Pflugkörper (7, 8) und (35, 36) erforderlichen Ölmenge versorgbar ausgebildet sind.

12. Aufsattel- bzw. Anhängedrehpflug nach einem der vorhergehenden Ansprüche,
**dadurch gekennzeichnet,**
**dass** der Hydraulikzylinder (57) für die Verstellung des zusätzlichen Pflugrahmens (32) im Durchmesser gleich oder kleiner ausgebildet ist als der entsprechende Hydraulikzylinder (56) des Pflugrahmens (6) und dass jeder Hydraulikzylinder (56, 57) mit fernbedienbaren, den Hubweg der Hydraulikzylinder (56, 57) begrenzenden Begrenzungsanschlägen und/oder -ventilen ausgerüstet ist.

13. Aufsattel- bzw. Anhängedrehpflug nach einem der vorhergehenden Ansprüche,
**dadurch gekennzeichnet,**
**dass** die beiden Hydraulikzylinder (56, 57) hydraulisch kommunizierend miteinander verbunden ausgebildet sind.

14. Aufsattel- bzw. Anhängedrehpflug nach einem der vorhergehenden Ansprüche,
**dadurch gekennzeichnet,**
**dass** die Hydraulikzylinder (56, 57) unabhängig voneinander betätigbar ausgebildet sind, dass die Arbeitsbreite pro Pflugkörper (35, 36) des zusätzlichen Pflugrahmens (32) unabhängig von der Arbeitsbreite des Pflugrahmens breiter oder schmaler einstellbar ist und dass die kardanische Verbindung des Pflugrahmens (6) mit dem zusätzlichen Pflug-rahmen (32) eine seitliche Verschwenkbarkeit des zusätzlichen Pflugrahmens von mindestens + 10° und - 10° zulassend ausgebildet ist.

15. Aufsattel- bzw. Anhängedrehpflug nach einem der vorhergehenden Ansprüche,
**dadurch gekennzeichnet,**
**dass** die Stellvorrichtungen für die Arbeitstiefe, die Neigung, die Arbeitsbreite pro Pflugkörper und die Drehvorrichtung des Pfluges (1) über einen Bordcomputer betätigbar ausgebildet sind, und dass das Ausheben, das Absenken und das Drehen des Pflugrahmens (6) und des zusätzlichen Pflugrahmens (32) jeweils am Feldende und -anfang automatisch GPS oder DGPS unterstützt regelbar sind.

## Claims

1. Semi-mounted or trailed turn-about plough (1) with a connecting device (2) for connection to a towing vehicle, with a plough frame (6) comprising at least two ploughing bases (7, 8) and running gear (4) arranged at the end with at least one support wheel (5), an additional plough frame (32) with at least two plough bases (35, 36) being associated with the plough frame (6), **characterised in that** the additional plough frame (32) is longitudinally displaceably and cardanically connected in a non-rotatable manner to the plough frame (6), and **in that** control gear (21) configured to influence the height of the traction point (24) of the additional plough frame (32) is provided between the plough frame (6) and the additional plough frame (32).

2. Semi-mounted or trailed turn-about plough according to claim 1, **characterised in that** the running gear (4) has a pivot bearing (12) with hinge pin (13), arranged horizontally and in the longitudinal direction in the working position of the plough (1) and a coupling frame (3) which pivots about the hinge pin (13) and is connected in the direction of travel to the trailing end of the plough frame (6) and on the opposing side has a coupling frame extension (20) with a connecting link-like guide (25) which is longitudinally displaceably, cardanically and non-rotatably connected to the coupling link (34) of the coupling frame extension (20).

3. Semi-mounted or trailed turn-about plough according to either of the preceding claims, **characterised in that** the coupling frame extension (20) has a pivot bearing (40) with hinge pin (58), arranged horizontally and in the longitudinal direction in the working position of the plough, and a support arm (41) which is pivotally arranged with respect to the coupling frame extension (20) and has stabilising struts (59), the additional plough frame being connectable in a non-rotatable manner to the coupling frame extension (20).

4. Semi-mounted or trailed turn-about plough according to any of the preceding claims, **characterised in that** the running gear (4) has a traction arm (22) with a yoke pin (24) configured to pull the support arm (41) and therefore the coupling frame extension (20) with additional plough frame (32).

5. Semi-mounted or trailed turn-about plough according to any of the preceding claims, **characterised in that** the control gear (21) is formed from the connecting link-like guide (25) with connecting link (34) in conjunction with the traction arm (22), the yoke pin (27) and the support arm (41).

6. Semi-mounted or trailed turn-about plough according to any of the preceding claims, **characterised in that** the support arm (41) has a curved path (42) and a roller (43) which is arranged to roll on the curved path (42), is provided on the yoke pin (27).

7. Semi-mounted or trailed turn-about plough according to any of the preceding claims, **characterised in that** a lever (45) is rotatably mounted on the yoke pin (27), which lever (45) receives the roller (43) and has coupling points (46, 47) for a tie member (50) and a guide bar (51), the tie member (50) being connected to the traction arm (22) and the guide bar (51) to the support arm (41) and together with the connecting link-like guide (25) being configured to operate as control gear (21).

8. Semi-mounted or trailed turn-about plough according to any of the preceding claims, **characterised in that** the tie member (50) is configured so as to be changeable in length, preferably as a hydraulic cylinder (55).

9. Semi-mounted or trailed turn-about plough according to any of the preceding claims, **characterised in that** the plough bases (7, 8) of the plough frame (6) are pivotally connected to the plough frame (6) via a rod (11) which brings about parallel guidance of the plough bases (7, 8), **in that** the coupling frame (3) connected to the running gear (4) is connected via a perpendicular pin (15) to the plough frame (6) and is configured so it can be guided parallel to the plough bases (7, 8) via a control rod (16).

10. Semi-mounted or trailed turn-about plough according to any of the preceding claims, **characterised in that** the plough frame (6) and the additional plough frame (32) are configured to be pivotal about the perpendicular pins (15) and (30) via a respective hydraulic cylinder (56, 57).

11. Semi-mounted or trailed turn-about plough according to any of the preceding claims, **characterised in that** the hydraulic cylinders (56, 57) are configured so they can each be supplied with the quantity of oil required for parallel pivoting of the individual plough bases (7, 8) and (35, 36) via a tractor-side distributor.

12. Semi-mounted or trailed turn-about plough according to any of the preceding claims, **characterised in that** the hydraulic cylinder (57) for the adjustment of the additional plough frame (32) is configured so as to be larger or smaller in diameter than the corresponding hydraulic cylinder (56) of the plough frame (6), and **in that** each hydraulic cylinder (56, 57) is equipped with remote controllable limit stops and/or valves limiting the travel of the hydraulic cylinders (56, 57).

13. Semi-mounted or trailed turn-about plough according to any of the preceding claims, **characterised in that** the two hydraulic cylinders (56, 57) are connected to one another in a hydraulically communicating manner.

14. Semi-mounted or trailed turn-about plough according to any of the preceding claims, **characterised in that** the hydraulic cylinders (56, 57) can be operated independently of one another, **in that** the working width per plough base (35, 36) of the additional plough frame (32) can be adjusted so as to be wider or narrower, independently of the working width, of the plough frame, and **in that** the cardanic connection of the plough frame (6) to the additional plough frame (32) is configured so as to allow lateral pivotability of the additional plough frame of at least + 10° and - 10°.

15. Semi-mounted or trailed turn-about plough according to any of the preceding claims, **characterised in that** the adjusting devices for the working depth, the inclination, the working width per plough base and the rotating mechanism of the plough (1) are configured so they can be operated via an onboard computer, and **in that** the lifting, lowering and rotation of the plough frame (6) and of the additional plough frame (32) can be automatically controlled at the end and the beginning of the field respectively by GPS or DGPS.

## Revendications

1. Charrue brabant semi-portée ou traînée (1) comprenant un dispositif de raccordement (2) pour le raccordement à un véhicule de traction, un châssis de charrue (6) présentant au moins deux corps de charrue (7, 8) et un mécanisme de roulement (4) aménagé en position d'extrémité avec au moins une roue d'appui (5), châssis auquel est affecté un châssis de charrue supplémentaire (32) avec au moins deux corps de charrue (35, 36), **caractérisée en ce que** le châssis de charrue supplémentaire (32) est indirectement raccordé au châssis de charrue (6) de manière à pouvoir se déplacer longitudinalement à la Cardan tout en résistant à la torsion et **en ce qu'**il est prévu entre le châssis de charrue (6) et la châssis de charrue supplémentaire (32) une commande de réglage (21) qui est conformée de manière à influencer la position en hauteur du point de traction (24) du châssis de charrue supplémentaire (32).

2. Charrue brabant servi-portée ou traînée selon la revendication 1, **caractérisée en ce que** le mécanisme de roulement (4) présente un montage pivotant (12) agencé horizontalement et dans la direction longitudinale en position de travail de la charrue (1) avec un axe de pivotement (13) et un châssis d'accouplement (3) pivotant autour de l'axe de pivotement (13), qui est raccordé à l'extrémité arrière du châssis de charrue (6) dans le sens de déplacement et présente, sur le côté opposé, une extension (20) du châssis d'accouplement avec un guide (25) en forme de coulisse, qui est relié à la coulisse (34) de l'extension (20) du châssis d'accouplement de manière à pouvoir se déplacer longitudinalement, à la Cardan tout en résistant à la torsion.

3. Charrue brabant semi-portée et traînée selon l'une quelconque des revendications précédentes, **caractérisée en ce que** l'extension (20) du châssis d'accouplement présente un montage pivotant (40) agencé horizontalement et dans la direction longitudinale en position de travail de la charrue avec un axe de pivotement (58) et un bras d'appui (41), qui est agencé à pivotement par rapport à l'extension (20) du châssis d'accouplement et présente des entretoises de stabilisation (59), le châssis de charrue supplémentaire étant conformé de façon à pouvoir être relié à l'extension (20) du châssis d'accouplement tout en résistant à la torsion.

4. Charrue brabant semi-portée ou traînée selon l'une quelconque des revendications précédentes, **caractérisée en ce que** le mécanisme de roulement (4) présente un bras de traction (22) avec un axe de traction (24), qui est conformé de manière à tirer le bras d'appui (41) et, par suite, l'extension (20) du châssis d'accouplement avec le châssis de charrue supplémentaire (32).

5. Charrue brabant semi-portée ou traînée selon l'une quelconque des revendications précédentes, **caractérisée en ce que** la commande de réglage (21) est formée du guide en forme de coulisse (25) avec la coulisse (34) en liaison avec le bras de traction (22), de l'axe de traction (27) et du bras d'appui (41).

6. Charrue brabant semi-portée ou traînée selon l'une quelconque des revendications précédentes, **caractérisée en ce que** le bras d'appui (41) présente un chemin incurvé (42) et il est prévu sur l'axe de traction (27) un galet (43) qui est aménagé de manière à rouler sur le chemin incurvé (42).

7. Charrue brabant semi-portée ou traînée selon l'une quelconque des revendications précédentes, **caractérisée en ce que** sur l'axe de traction (27) est monté à rotation un levier (45) qui reçoit le galet (43) et présente des points d'articulation (46, 47) pour une bielle de traction (50) et une bielle (51), où la bielle de traction (50) est raccordée au bras de traction (22) et la bielle (51) au bras d'appui (41) et sont conformées ensemble avec le guide en forme de coulisse (25) pour opérer comme commande de réglage (21).

8. Charrue brabant semi-portée ou traînée selon l'une quelconque des revendications précédentes, **caractérisée en ce que** la bielle de traction (50) est conformée de manière à pouvoir être réglée longitudinalement, de préférence sous la forme d'un vérin hydraulique (55).

9. Charrue brabant semi-portée ou traînée selon l'une quelconque des revendications précédentes, **caractérisée en ce que** les corps de charrue (7, 8) du châssis de charrue (6) sont raccordés à pivotement au châssis de charrue (6) via une tige (11) assurant le guidage parallèle des corps de charrue (7, 8), et **en ce que** le châssis d'accouplement (3) raccordé au mécanisme de roulement (4) est raccordé au châssis de charrue (6) via un axe vertical (15) et est conformé de manière à pouvoir être guidé sur une tige de commande (16) parallèlement aux corps de charrue (7, 8).

10. Charrue brabant semi-portée ou traînée selon l'une quelconque des revendications précédentes, **caractérisée en ce qu'**autant le châssis de charrue (6) que le châssis de charrue supplémentaire (32) sont conformés de manière à pouvoir pivoter via un vérin hydraulique respectif (56, 57) autour des axes verticaux (15) ou (30).

11. Charrue brabant semi-portée ou traînée selon l'une quelconque des revendications précédentes, **caractérisée en ce que** les vérins hydrauliques (56, 57) sont conformés de manière à pouvoir être alimentés respectivement par la quantité d'huile requise pour le pivotement parallèle des corps de charrue individuels (7, 8) et (35, 36) via un diviseur de débit côté tracteur.

12. Charrue brabant semi-portée ou traînée selon l'une quelconque des revendications précédentes, **caractérisée en ce que** le vérin hydraulique (57) est conformé, pour le réglage du châssis de charrue supplémentaire (32), avec un diamètre égal ou inférieur à celui du vérin hydraulique correspondant (56) du châssis de charrue (6) et **en ce que** chaque vérin hydraulique (56, 57) est équipé de butées limites et/ou de soupapes qui peuvent être télécommandées et délimitent la course des vérins hydrauliques (56, 57).

13. Charrue brabant semi-portée ou traînée selon l'une quelconque des revendications précédentes, **caractérisée en ce que** les deux vérins hydrauliques (56, 57) sont conformés raccordés l'un à l'autre de façon à communiquer par voie hydraulique.

14. Charrue brabant semi-portée ou traînée selon l'une quelconque des revendications précédentes, **caractérisée en ce que** les vérins hydrauliques (56, 57) sont conformés de façon à pouvoir être commandés indépendamment l'un de l'autre, **en ce que** la largeur de travail par corps de charrue (35, 36) du châssis de charrue supplémentaire (32) peut être réglée plus grande ou plus petite indépendamment de la largeur de travail du châssis de charrue et **en ce que** le raccordement à la Cardan du châssis de charrue (6) avec le châssis de charrue supplémentaire (32) est conformé de manière à permettre une capacité de pivotement latérale du châssis de charrue supplémentaire d'au moins +10 et -10 degrés.

15. Charrue brabant semi-portée ou traînée selon l'une quelconque des revendications précédentes, **caractérisée en ce que** les dispositifs de réglage pour la profondeur de travail, l'inclinaison, la largeur de travail par corps de charrue et le dispositif de rotation de la charrue (1) sont conformés de manière à pouvoir être commandés via un ordinateur de bord et **en ce que** le soulèvement, l'abaissement et la rotation du châssis de charrue (6) et du châssis de charrue supplémentaire (32) peuvent être réglés automatiquement respectivement à la fin et au début d'un champ en s'appuyant sur le système GPS ou DGPS.
